# EUROPÄISCHE PATENTSCHRIFT

(11) **EP 1 285 251 B1**
(45) Veröffentlichungstag und Bekanntmachung des Hinweises auf die Patenterteilung: **03.07.2013**
(21) Anmeldenummer: 01944930.5
(22) Anmeldetag: 16.05.2001
(51) Int. Cl.: B01L 3/02, G01N 1/40

(54) **PROBENZYLINDER, INSBESONDERE MIT EINER FILTRIERVORRICHTUNG FÜR DIE WIEDERGEWINNUNG VON ZELLMATERIAL AUS KÖRPERFLÜSSIGKEITEN**
SAMPLE CYLINDER, ESPECIALLY A SAMPLE CYLINDER THAT IS PROVIDED WITH A FILTRATION DEVICE FOR RECOVERING CELL MATERIAL FROM BODY FLUIDS
CYLINDRE DE PRISE D'ECHANTILLON, DOTE EN PARTICULIER D'UN DISPOSITIF DE FILTRAGE DESTINE A LA RECUPERATION DE MATIERE CELLULAIRE DE FLUIDES CORPORELS

(30) Priorität: 18.05.2000 DE 10024137
(43) Veröffentlichungstag der Anmeldung: 26.02.2003
(73) Patentinhaber: Schlüter, Liselotte, 79346 Endingen (DE); Schlüter, Kai-Uwe, 77815 Bühl (DE); Räse, Ute, 12169 Berlin (DE)
(72) Erfinder: Schlüter, Gert, verstorben (DE)
(74) Vertreter: Holland, Ralf
(86) Internationale Anmeldenummer: PCT/DE2001/001839
(87) Internationale Veröffentlichungsnummer: WO 2001/088501

(56) Entgegenhaltungen:
- WO-A-00/20092
- DE-C- 3 719 302
- DE-U- 29 806 021
- GB-A- 2 232 599

## Beschreibung

Die Erfindung betrifft einen Probenzylinder mit einem Spritzenkonsussegment, insbesondere mit einer Filtriervorrichtung für die Wiedergewinnung von Zellmaterial aus Körperflüssigkeiten.

Aus der DE 3719302 ist eine Filtriervorrichtung zum Abtrennen und Sammeln von Zellen und Partikeln aus Flüssigkeiten bekannt, durch deren Verwendung insbesondere bei quantitativen Methoden der Auswertung, beispielsweise bei einer Harnsedimentanalyse, die Effizienz erhöht werden kann. Die dort beschriebene Vorrichtung weist einen Probenzylinder mit einem Spritzenkonussegment auf. In dem Probenbehälter wird ein Filtrationstubus eingeschoben, der nach Art eines Spritzenkolbens verschiebbar ist und der einerends eine ein- oder mehrstufige Filtervorrichtung aufweist.

Solche Vorrichtungen sind auch aus DE 29 806 021 U und GB 2 232 599 bekannt.

Die diagnostische Aufgabe verlangt z. B. im Bereich der Harnanalyse, daß die im Urin vorkommenden Partikel wie Erythrozyten, Leukozyten, Urothelzellen, andere Begleitzellen, Kristallinekörper, Hyaline Zylinder und auch Keime aus einer großen Flüssigkeitsmenge, z. B. aus einer Blasenfüllung oder aus Proben von 50 ml oder 100 ml, in einem Sediment oder in einer konstanten Flüssigkeitsmenge von 1 ml verlustlos konzentriert bzw. angereichert werden. Dies vermag die dortige Filtriervorrichtung zum Abtrennen und Sammeln von Zellen und Partikeln aus Flüssigkeiten, bspw. aus Harn, zu leisten. Die qualitative Auswertung erfolgt in an sich bekannter Weise durch das tropfenweise Einbringen der Probe in Zählkammern.

Im Hinblick auf verbesserte diagnostische Möglichkeiten wurde die bekannte Vorrichtung für die Belange der Zytologie verbessert, für die ein morphologisch einwandfreies Zellmaterial auf Objektträgern verlangt wird. Hierzu ist eine Vorrichtung bekannt geworden, bei der innerhalb eines Probenzylinders mit einem Spritzenkonussegment und einem daran anschließenden Zylindersegment ein Filtrationstubus, abgedichtet gegen die zylindrische Innenwand des Probenzylinders, geführt ist. Ist nach Art einer Spritze eine Flüssigkeit aufgezogen und in dem Probenzylinder befindlich, der Spritzenkonus verschlossen oder der Probenzylinder bei entnommenem Filtrationstubus mit der Körperflüssigkeit gefüllt und der Filtrationstubus eingesetzt worden, wird bei Niederdrücken des Filtrationstubus gegen die Probenflüssigkeit diese die Filtriervorrichtung durchsetzen und sich im Filtrationstubus sammeln oder wird anderweitig abgeführt werden.

Bei dem Filtriervorgang werden sich weiter Partikel auf einer der Filtriervorrichtung insbesondere vorstehenden Filteroberfläche sammeln. Üblicherweise wird dann nach Entfernen der Probenflüssigkeit der Filtrationstubus dem Probenzylinder entnommen. Von der Filteroberfläche können danach die dort gesammelten Partikel bspw. für eine mikroskopische Diagnose auf einem Objektträger abgedrückt werden, womit auf eine bei der quantitativen Analyse notwendige angereicherte Suspension im Probenzylinder verzichtet ist.

Diese Printtechnik zur Gewinnung medizinischer Präparate hat sich außerordentlich bewährt. Um jedoch das auf der Filteroberfläche gesammelte Zellmaterial durch ein solches Printen auf Objektträger übertragen zu können, muß der Filtrationtubus aus dem Probenzylinder entfernt werden. Hierzu wird, nachdem das Filtrat oder der Überstand entfernt wurde, die dann offene Vorrichtung umgedreht und beispielsweise auf einer Zellstoffunterlage aufgesetzt. Es kann dann der Probenzylinder vom Filtrationstubus gegen einen erheblichen Widerstand unter entsprechendem Krafteinsatz abgezogen werden. Hierbei ist es unvermeidlich, daß Reste der Probe an der Außenwandung abfließen, wodurch die Finger des Anwenders sowie auch die Unterlage benetzt werden kann. Diese Gefahr einer Kontaminierung beispielsweise bei infektiösem Material ist nachteilig und aus Hygienegründen nicht vertretbar.

Gerade im Hinblick auf die Gefahr einer Kontaminierung sollte auch ausgeschlossen werden, daß bereits gebrauchte Vorrichtungen wiederverwendet werden können.

Dieser technischen Problematik wird allgemein bei einem Probenzylinder mit einem Spritzenkonussegment durch den Probenzylinder nach der Erfindung begegnet, wobei gemäß des Anspruches 1 darauf abgestellt ist, daß das Spritzenkonussegment von einem Zylindersegment trennbar ist. Insbesondere ist daran gedacht, daß bei einem Probenzylinder, aufweisend eine Filtriervorrichtung mit einem gegen die Innenwand des Probenzylinders abdichtend gehaltenen Filter, nach Abtrennen des Spritzenkonussegmentes der Filter mit einer Oberfläche axial seiner Fassung und in einer Gebrauchsstellung der Filtriervorrichtung dem Zylindersegment vorsteht.

Durch die Maßnahmen bei dem Probenzylinder werden eine Reihe von Vorteilen erreicht. Ist die Filtriervorrichtung nach Art eines Filtriertubus in den Probenzylinder eingebracht, so muß dieser dem Probenzylinder nicht mehr entnommen werden. Vielmehr ist durch Entfernen des Spritzenkonussegmentes die Filteroberfläche mit angesammelten Zellinhalten und Partikeln frei zugänglich, bspw. für das Abdrücken derselben auf einem Objektträger. Hierzu steht zweckmäßigerweise die Oberfläche sowohl der Fassung des Filters als auch dem Zylindersegment in dieser Gebrauchsstellung axial vor und ist damit frei zugänglich.

In Folge kommt das auf der Oberfläche des Filters gesammelte Zellmaterial erst und nur dann mit der Umgebung in Kontakt, wenn es auch weiter präpariert wird. Insbesondere ist auch ein versehentliches Austrocknen des Filters außerhalb des Probenzylinders nicht möglich. Vielmehr verbleibt, bis zu dem angesprochenen Präparationsschritt, die Filteroberfläche mit dem Zellmaterial in dem Mikroklima des Probenzylinders. Auch eine mechanische Einwirkung auf die Zellinhalte auf der Filteroberfläche bspw. durch ein Verkanten der Filtriervorrichtung bei der Entnahme, einem Anschlagen an den freien Rand des Probenzylinders oder dergleichen, ist durch die erfindungsgemäßen Maßnahmen sicher vermieden.

Weiter ist vorgesehen, daß das Zylindersegment und ein Abschnitt des Spritzenkonussegmentes eine gemeinsame zylindrische Mantelinnenwand des Probenzylinders ausbilden. Damit wird der Spritzenkonus vollständig von dem Zylindersegment getrennt, d.h., daß die Trennung in einem Bereich konstanten, zylindrischen Querschnittes erfolgt und nicht im Bereich des sich zum freien Ende hin verjüngenden Spritzenkonus. In Folge dieser Maßnahme steht nach dem Abtrennen des Spritzenkonussegmentes der maximale Querschnitt des Probenzylinders an der Trennstelle zur Verfügung. Weiter wird durch diese Maßnahme die axiale Beweglichkeit der eingebrachten Filtriervorrichtung in keinster Weise beeinträchtigt. Die Dichtigkeit der Fassung gegen die Innenwand des Probenzylinders wird darüberhinaus sichergestellt, auch über die Trennstelle hinweg, da dort keine Querschnittsänderung der Mantelinnenwand gegeben ist.

In einer ersten konstruktiven Alternative ist vorgesehen, daß Zylinder- und Spritzenkonussegment zweistückig ausgebildet sind. Für eine flüssigkeitsdichte Anbindung des Spritzenkonussegmentes an das Zylindersegment sind dann geeignete Maßnahmen zu treffen.

Ist an eine axial feststehende Filtriervorrichtung gedacht, so kann die Fassung des Filters das Zylinder- und das Spritzenkonussegment miteinander verbinden. Eine solche Verbindung kann in an sich bekannter Art durch geeignete Schnapp-, Rast- und Schraubverbindungen gegeben sein. Zusätzlich können Dichtungsringe vorgesehen werden, die die flüssigkeitsdichte Anbindung garantieren.

Da jedoch regelmäßig die axiale Beweglichkeit der Filtriervorrichtung für die eingangs erläuterten Aufgaben nötig ist, werden zweckmäßigerweise Zylinder- und Spritzenkonussegment durch eine äußere und/oder innere Manschette miteinander verbunden. Bei einer äußeren Manschette weisen zweckmäßigerweise Zylinder- und Spritzenkonussegment zumindest im Bereich der Trennstelle gleiche äußere und bevorzugt gleiche innere Durchmesser auf. Gleiche Innendurchmesser sind gleichfalls regelmäßig Voraussetzung für eine innere Manschette. Erstreckt sich die innere Manschette über den gesamten zylindrischen Bereich des Probenzylinders, so ist auch hier kein Abdichtungsproblem gegenüber der Fassung für den Filter gegeben. Alternativ kann durch eine Stirnseite einer solchen inneren Manschette ein axialer Anschlag für die Filtriervorrichtung gezielt ausgebildet werden, bspw. für ein Festlegen eines exakten Volumens des Spritzenkonussegmentes.

Auch können durch eine im äußeren Durchmesser abgestufte innere Manschette unterschiedliche Innendurchmesser von Zylindersegment und Spritzenkonussegment ausgeglichen werden und kann gezielt ein Innendurchmesser für an spezielle Aufgaben angepaßte Filtriervorrichtungen zur Verfügung gestellt werden.

Es kann daran gedacht sein, die Manschetten gesondert auszubilden. Alternativ kann eine solche Manschette auch einstückig mit dem Zylinder- und/oder Spritzenkonussegment ausgebildet sein, womit Zylinder- und Spritzenkonussegment sich axial überlappend verbunden sind. In Einzelfällen mag ein teleskopartiges Einstecken von Zylinder- und Spritzenkonussegment als Verbindung auch ausreichend sein.

Neben der zweistückigen Ausführungsvariante kann vorgesehen sein, daß Zylinder- und Spritzenkonussegment einstückig ausgebildet und an einer Sollbruchstelle trennbar sind. Auch bei dieser Variante ist durch die Sollbruchstelle die Trennung wohl definiert möglich. Eine solche Sollbruchstelle wird regelmäßig durch eine Querschnittsverjüngung an dieser Stelle ausgebildet, wobei geeignet brechende oder reißende Rippen diese gegebenenfalls mechanisch verstärken können.

Unabhängig von einer ein- oder zweistückigen Ausbildung ist in konstruktiver Ausgestaltung weiter vorgesehen, daß der Anschluß des Spritzenkonussegmentes an das Zylindersegment nach Art eines Garantieverschlusses erfolgt, welche Garantieverschlüsse im Stand der Technik beispielsweise bei Flaschenverschlüssen bekannt sind. Infolge dieser Maßnahme ist ein sicheres Erkennen gebrauchter Gerätschaften ermöglicht. Dies unabhängig davon, ob regelmäßig der Probenzylinder nach der Erfindung in Zylinder- und Spritzenkonussegment zerlegbar und wieder zusammensetzbar ist.

Letzteres wird in Ausnahmefällen, insbesondere bei hochsterilen Anwendungen regelmäßig unerwünscht sein. Es ist dann vorgesehen, daß durch die Zerstörung von Anschluß- und/oder Dichtungselementen bzw. des Spritzenkonussegmentes selbst bei dem Trennen des Spritzenkonussegmentes von dem Zylindersegment diese nicht mehr funktionsfähig zusammensetzbar sind.

Insbesondere bei der zweistückigen Ausbildung des Probenzylinders nach der Erfindung kann vorgesehen sein, daß der Probenzylinder im Bereich der Trennstelle von Spritzenkonussegment und Zylindersegment einen axialen Anschlag für die Filtriervorrichtung aufweist. Insbesondere können die Trennkanten von Spritzenkonussegment bzw. Zylindersegment eine nach innen weisende, der Mantelinnenwand vorstehende Nase als Anschlag aufweisen. Infolge dieser Maßnahme wird spritzenkonusseitig ein bestimmtes, vorgebbares Volumen auch zur Verfügung gestellt.

Die Erfindung wird anhand der Zeichnung näher erläutert, in der lediglich Ausführungsbeispiele dargestellt sind. In der Zeichnung zeigt:
- Figur 1:: einen Probenzylinder mit eingebrachter Filtriervorrichtung nach der Erfindung in einem Schnitt,
- Figur 2:: den Probenzylinder nach Figur 1 mit abgenommenen Spritzenkonussegment,
- Figur 3:: ein zweites Ausführungsbeispiel in einen Schnitt im Bereich der Trennstelle,
- Figur 4:: ein drittes Ausführungsbeispiel,
- Figur 5:: ein viertes Ausführungsbeispiel und
- Figur 6:: ein fünftes Ausführungsbeispiel.

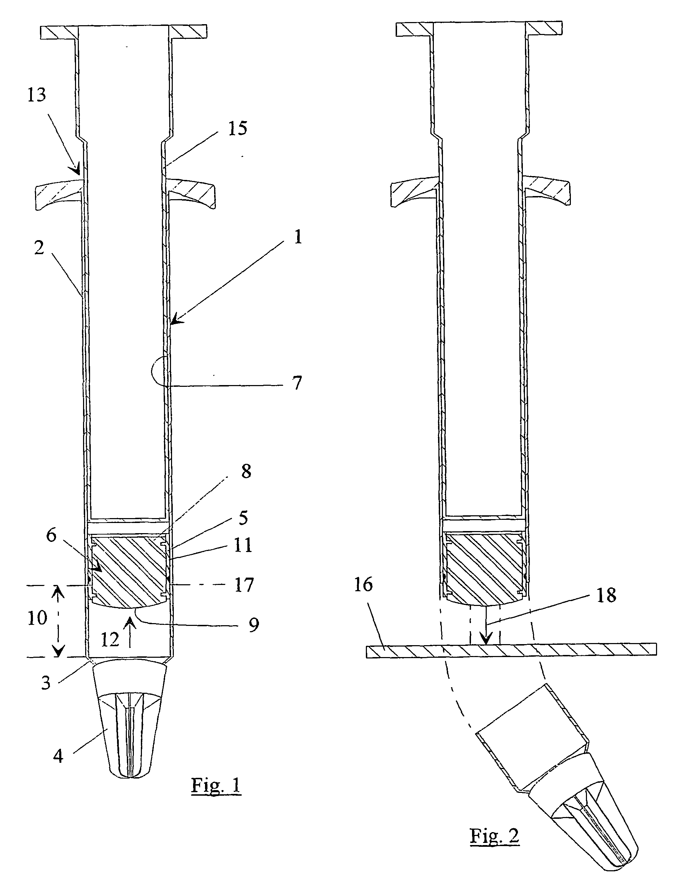

In Figur 1 ist ein Probenzylinder 1 nach der Erfindung gezeigt, bestehend aus einem Zylindersegment 2 und einem abtrennbaren Spritzenkonussegment 3, beim Ausführungsbeispiel gemäß den Figuren 1 und 2 zweiteilig ausgeführt. Die Verbindung zwischen dem von einer Kappe 4 verschlossenen Spritzenkonussegment 3 und dem Zylindersegment 2 erfolgt über eine Fassung 5 einer in den Probenzylinder 1 eingebrachten, hier vereinfacht dargestellten Filtriervorrichtung 6, beispielsweise auch nach Art der aus der DE 3719302 bekannten. Die Fassung 5 hält mit einem Abschnitt 11 gegen die Mantelinnenwand 7 des Probenzylinders 1 abdichtend einen Filter 8. Mit einer Oberfläche 9 steht der Filter 8 der Fassung 5 axial vor, wobei dieser vorstehende Abschnitt aufgrund einer radialen Einschnürung des Filters 8 durch die Fassung 5, beispielsweise durch eine konische Filteraufnahme bzw. durch eine umlaufende radial nach innen weisende Nase, sich pilzartig darstellt.

Das Zylindersegment 2 und ein Abschnitt 10 des Spritzenkonussegmentes 3 bilden gemeinsam die zylindrische Mantelinnenwand 7 des Probenzylinders 1 aus. Infolge kann die Fassung 5 mit dem Abschnitt 11 gleichbleibenden Querschnittes von dem Maß des inneren zylindrischen Bereiches des Probenzylinders 1 ausgebildet das Zylindersegment 2 und das Spritzenkonussegment 3 miteinander verbinden.

Je nach Ausführung kann diese Verbindung durch einen einfachen Press- und/oder Klemmsitz des Zylindersegmentes 2 bzw. des Spritzenkonussegmentes 3 auf dem Abschnitt 11 der Fassung 5 erfolgen. Rast-, Schnapp- oder Schraubverschlüsse, im einzelnen nicht dargestellt, sind gleichfalls problemlos möglich. Zusätzlich im Abschnitt 11 eingebrachte Dichtungselemente wie Dichtringe 14 können weiter vorgesehen sein. Diese Maßnahmen werden im wesentlichen durch den beabsichtigten Verwendungszweck des Probenzylinders 1 nach der Erfindung bestimmt werden.

Bei der in den Figuren 1 und 2 gezeigten Ausführungsform ist die Filtriervorrichtung 6 axial im Probenzylinder 1 naturgemäß nicht verschiebbar. Ein Ansaugen einer flüssigen Probe ist dennoch problemlos durch ein Herausziehen des Tubus 15 möglich. Alternativ kann an dem freien Ende 13 des Probenzylinders 1 beispielsweise eine Saugpumpe, ein Ballon 17 ausreichender Größe oder dergleichen angesetzt werden. Infolge der Durchströmung des Filters 8 in Richtung des Pfeils 12 wird sich auf dessen Oberfläche 9 ausgefiltertes Zellmaterial ablagern.

Nach dem Entfernen der angesammelten Flüssigkeit, gegebenenfalls, nach Entfernen der Kappe 4, auch der in dem Spritzenkonussegment 3 angesammelten, kann nach der Erfindung das Spritzenkonussegment 3 von dem Zylindersegment 2 in der in Figur 1 strichpunktiert angedeuteten Ebene 17 getrennt werden. Es wird dann in der Gebrauchsstellung der Filtriervorrichtung 6 gemäß Figur 2 die Oberfläche 9 auch dem Zylindersegment 2 sowie der Fassung 5 axial frei vorstehen.

Bei diesem Ausführungsbeispiel können Zylindersegment 2 und die Fassung 5 der Filtriervorrichtung 6 unlösbar miteinander verbunden, gegebenenfalls gar einstückig auch ausgebildet sein.

Zur Gewinnung eines medizinischen Präparates auf einem Objektträger 16 wird nun das Zylindersegment 2 mit Filtriervorrichtung 6 vorsichtig und vertikal gem. Pfeil 18 in Fig. 2 mit der Oberfläche 9 auf einem Objektträger 16 aufgesetzt, um das auf der Oberfläche 9 befindliche Zellmaterial auf den Objektträger 16 zu übertragen.

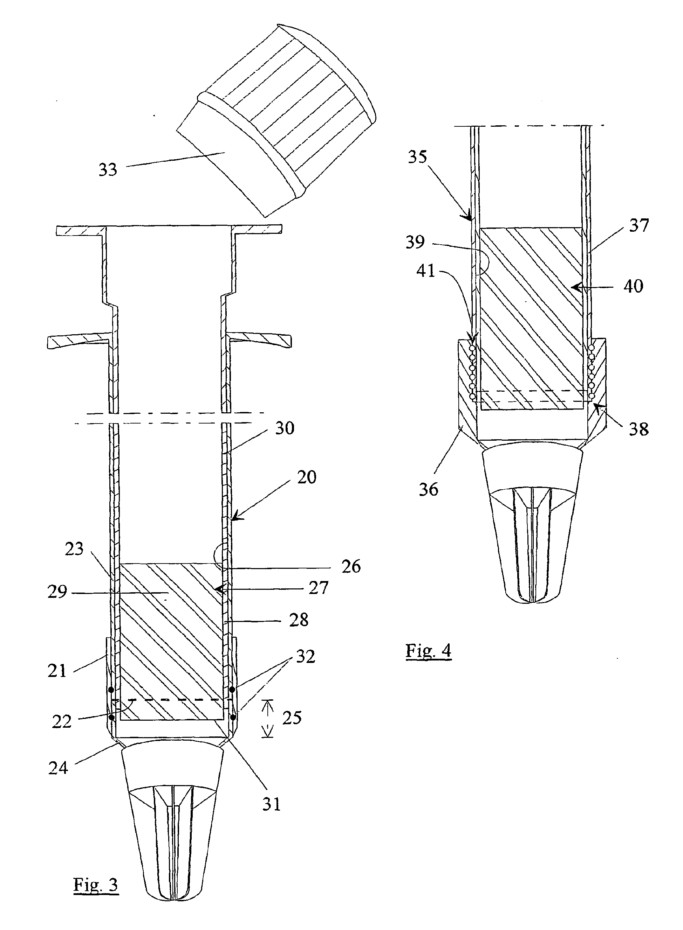

Weisen, wie in Figur 3 dargestellt, ein zylindrischer Abschnitt 25 des Spritzenkonussegmentes 24 sowie das Zylindersegment 23 gleiche Innenquerschnitte auf, so wird eine gemeinsame Mantelinnenwand 26 des Probenzylinders 20 ausgebildet. Infolge ist eine freie, axial Beweglichkeit der Filtriervorrichtung 27 gegeben. Zweckmäßigerweise ist dann ein innerhalb des Probenzylinders 20 geführter und gegen diesen abgedichteter Tubus 30 gleichermaßen als Fassung 28 des Filters 29 ausgebildet. Eine bei aufgesteckter Kappe 33 aufgezogene Probenflüssigkeit wird sich dann in dem Tubus 30 sammeln.

Ist ein Filtriervorgang abgeschlossen, kann das in dem Tubus 30 anstehende Filtrat abgegossen werden, gem. des Standes der Technik, der Tubus 30 dem Probenzylinder 20 in der eingangs erläuterten Weise entnommen werden und das auf der Filteroberfläche 31 befindliche Zellmaterial auf einen Objektträger übertragen werden, wobei gegebenenfalls noch in dem Tubus anstehendes Filtrat als Rückspülmedium dienen kann.

Bei dem Probenzylinder nach der Erfindung wird jedoch nach dem Abgießen des Filtrats der Tubus 30 wieder in die in Fig. 3 gezeigte Lage zurückgebracht und steht nach Entfernen des Spritzenkonussegments 24 für eine Übertragung des ausgefilterten Zellmaterials auf einen Objektträger die Filteroberfläche 24 der Fassung 28 des Filters 29 und dem Zylindersegment 23 axial vor.

Hierzu überdeckt bei der zweiteiligen Ausführungsform des Probenzylinders 20 gemäß Figur 3 eine äußere Manschette 21 eine vergrößert dargestellte Trennfuge 22 zwischen dem Zylindersegment 23 und dem Spritzenkonussegment 24.

In einer einfachen Ausführungsform kann die äußere Manschette 21 als Schrumpfschlauch beispielsweise ausgebildet das Zylindersegment 23 mit den Spritzenkonussegment 24 verbinden. Bevorzugt werden jedoch massiv ausgebildete Manschetten 21 derart, daß das Spritzenkonussegment 24 bzw. das Zylindersegment 23 mit der Manschette 21 durch eine Rast-, Schnapp- oder Schraubverbindung, gegebenenfalls unter Hinzunahme geeigneter Dichtelemente, verbunden sind.

Für eine gute Abdichtung der Fassung 28 für den Filter 29 der Filtriervorrichtung 27 gegenüber der Mantelinnenwand 26 sind weiter gesondert ausgebildete Dichtringe 32 noch vorgesehen.

Bei dem Probenzylinder 35, wieder zweiteilig ausgeführt, nach Figur 4, ist das Spritzenkonussegment 36 kappenartig, das Zylindersegment 37 axial überlappend und übergreifend ausgebildet. Wiederum kann durch eine geeignete Abstufung, vergleiche Pfeil 38, sichergestellt werden, daß ein Abschnitt des Zylindersegmentes 36 und das Zylindersegment 37 eine gemeinsame zylindrische Mantelinnenwand 39 ausbilden. Infolge dieser Maßnahme ist die Filtriervorrichtung 40 wieder frei axial innerhalb des Probenzylinders 35 bewegbar.

Pfeil 41 deutet Anschluß- und/oder Dichtungselemente an, die den flüssigkeitsdichten Anschluß des Spritzenkonussegmentes 36 an das Zylindersegment 37 sicherstellen. Dies können beispielsweise eingelegte Dichtungsringe sein, geeignet ausgebildete, miteinander verrastende oder verschnappende Nasen und Ausnehmungen, ein Gewinde oder dergleichen mehr.

Soll insbesondere keine Wiederverwendbarkeit des Probenzylinders nach der Erfindung sichergestellt werden, werden zweckmäßigerweise bei einem Lösen des Spritzenkonussegmentes 36 von dem Zylindersegment 37 diese Anschluß- und/oder Dichtungselemente 41 zerstört werden derart, daß ein funktionelles Zusammensetzen nicht mehr möglich ist.

Damit ist eine Verbindung zwischen dem Spritzenkonussegment 36 und dem Zylindersegment 37 nach Art eines Garantieverschlusses ausgebildet, der sicher eine Manipulation erkennen läßt.

Neben der zweistückigen Ausführung des Probenzylinders nach der Erfindung ist eine einstückige Ausführung eines Probenzylinders 45 fertigungstechnisch einfach möglich. Es sind dann Zylindersegment 46 und Spritzenkonussegment 47 regelmäßig an einer den Trennungsbereich wohl definierenden Sollbruchstelle 48 trennbar. Eine solche Sollbruchstelle 48 weist regelmäßig derart geringe Querschnitte auf, daß ein leichtes Trennen von Zylindersegment 45 und Spritzenkonussegment 47 durch Reißen bzw. Brechen der Sollbruchstelle 48 möglich ist. Damit andererseits die ausreichende mechanische Stabilität gewahrt bleibt, können Versteifungsrippen 49, gegebenenfalls selbst auch mit Sollbruchstellen versehen, die mechanisch schwache Verbindung über die Sollbruchstelle 48 noch verstärken.

Auch bei einer solchen einteiligen Ausführung kann der Probenzylinder 45 durchaus wiederverwendbar gestaltet sein. Alternativ ist es auch hier möglich, durch geeignetes Reißen bzw. Brechen der Sollbruchstelle 48 bzw. der Rippen 49 eine Wiederverwendung auszuschließen. In jedem Fall wird bei einer derartigen einteiligen Ausführung des Probenzylinders 45 sicher sichtbar, daß dieser beispielsweise bereits benutzt wurde.

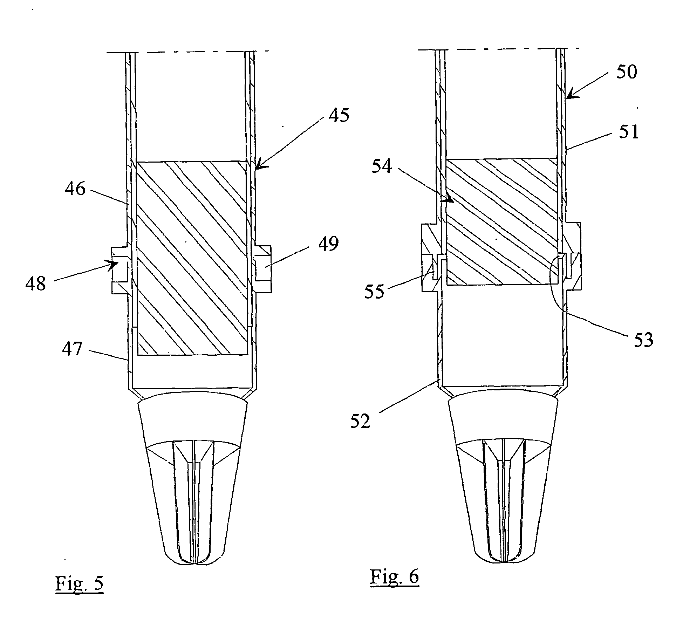

Figur 6 zeigt wieder eine zweiteilige Ausführung eines Probenzylinders 50 mit Zylindersegment 51 und Spritzenkonussegment 52. Bei der zweiteiligen Ausführungsform gemäß Figur 6 ist es möglich, die einander zugewandten Enden des Zylindersegmentes 51 bzw. des Spritzenkonussegmentes 52 mit einer radial nach innen weisenden Nase 53 zu versehen.

Sind sowohl am Spritzenkonussegment 52 als auch am Zylindersegment 51 derartige Nasen vorgesehen, können diese als Anschluß- und/oder Dichtungselement auch Verwendung finden. Insbesondere ist jedoch durch eine solche nach innen vorspringende Nase 53 ein axialer Anschlag für die Filtriervorrichtung 54 auch gegeben. Es kann damit innerhalb des Spritzenkonussegmentes 52 ein exakt definiertes Volumen in der Gebrauchslage der Filtriervorrichtung 54 nach Figur 6 vorgegeben werden. Wird die Wand des zylindrischen Abschnittes des Spritzenkonussegmentes 52 entsprechend dick ausgebildet, kann deren Stirnseite gleichfalls den Anschlag für die Filtriervorrichtung 54 ausbilden, ohne das eine der Mantelinnenwand vorstehende Nase 53 nötig ist.

Weiter zeigt Figur 6 an dem dem Spritzenkonussegment 52 zugewandten Ende des Zylindersegmentes 50 eine radial umlaufende, axial vorstehende Lippe 55. Diese Lippe 55 wird in einer entsprechenden Ausnehmung des Spritzenkonussegmentes 52 dichtend gehalten. Auch hier können wieder die bereits angesprochenen Maßnahmen zur weiteren Abdichtung bzw. für einen festen Halt in Form von Dichtelementen, Schnapp- und Rastverbindungen, Gewinden etc. vorgesehen werden.

## Patentansprüche

1. Probenzylinder mit einem von einem Zylindersegment abtrennbaren Spritzenkonussegment und einer Filtriervorrichtung, **dadurch gekennzeichnet, dass** das Zylindersegment (2) und ein Abschnitt (10) des Spritzenkonussegments (3) eine gemeinsame zylindrische Mantelinnenwand (7) des Probenzylinders (1) ausbilden, dass das Zylindersegment (2) eine Filtriervorrichtung (6) mit einem über seine axiale Erstreckung gegen die Mantelinnenwand (7) des Probenzylinders (1) abdichtend gehaltenen Filter (8) aufweist und dass der Filter (8) nach Abtrennen des Spritzenkonussegmentes (3) mit einer Oberfläche (9) axial seiner Fassung (5) und in einer Gebrauchsstellung der Filtriervorrichtung (6) dem Zylindersegment (2) vorsteht.

2. Probenzylinder nach einem oder mehreren der vorangehenden Ansprüche, **dadurch gekennzeichnet, daß** Zylinder (2)- und Spritzenkonussegment (3) zweistückig ausgebildet sind.

3. Probenzylinder nach einem oder mehreren der vorangehenden Ansprüche, **dadurch gekennzeichnet, daß** Zylinder(2)- und Spritzenkonussegment (3) durch die Fassung (5) des Filters (8) miteinander verbunden sind.

4. Probenzylinder nach einem oder mehreren der vorangehenden Ansprüche, **dadurch gekennzeichnet, daß** Zylinder (23)- und Spritzenkonussegment (24) durch eine äußere und/oder innere Manschette (21) miteinander verbunden sind.

5. Probenzylinder nach einem oder mehreren der vorangehenden Ansprüche, **dadurch gekennzeichnet, daß** Zylinder - (37) und Spritzenkonussegment (36) sich axial überlappend verbunden sind.

6. Probenzylinder nach einem oder mehreren der vorangehenden Ansprüche, **dadurch gekennzeichnet, daß** Zylinder (3)- und Spritzenkonussegment (2) zerstörungsfrei trennbar sind.

7. Probenzylinder nach einem oder mehreren der vorangehenden Ansprüche, **dadurch gekennzeichnet, daß** Zylinder (45)- und Spritzenkonussegment (47) einstückig ausgebildet und an einer Sollbruchstelle (48) trennbar sind.

8. Probenzylinder nach einem oder mehreren der vorangehenden Ansprüche, **dadurch gekennzeichnet, daß** der Anschluß des Spritzenkonussegments (36) an das Zylindersegment (37) nach Art eines Garantieverschlusses ausgebildet ist.

9. Probenzylinder nach einem oder mehreren der vorangehenden Ansprüche, **gekennzeichnet durch** die Zerstörung von Anschluß- und/oder Dichtungselementen (41) bzw. des Spritzenkonussegmentes bei dem Trennen des Spritzenkonussegmentes (36) von dem Zylindersegment (37).

10. Probenzylinder nach einem oder mehreren der vorangehenden Ansprüche, **dadurch gekennzeichnet, daß** der Probenzylinder (50) im Bereich der Trennstelle von Spritzenkonussegment (52) und Zylindersegment (51) einen axialen Anschlag (53) für die Filtriervorrichtung (54) aufweist.

## Claims

1. A sampling cylinder with a syringe cone segment detachable from a cylinder segment and a filtering device, **characterised in that** the cylinder segment (2) and a section (10) of the syringe cone segment (2) form a joint cylindrical inner mantle wall (7) of the sampling cylinder (2), **in that** the cylinder segment (2) has filtering device (6) with a filter held via its axial extension in a sealing manner against the inner mantle wall (7) of the sampling cylinder (1) and **in that** after detaching the syringe cone segment (3) the filter (8) projects from the cylinder segment (2) with a surface (9) axial to its holder (5) and in a usage position of the filter device (6).

2. The sampling cylinder in accordance with one or more of the preceding claims **characterised in that** the cylinder segment (2) and the syringe cone segment (3) produced in two parts.

3. The sampling cylinder in accordance with one or more of the preceding claims **characterised in that** the cylinder segment (2) and the syringe cone segment (3) are connected to each other by the holder (5) of the filter (8).

4. The sampling cylinder in accordance with one or more of the preceding claims **characterised in that** the cylinder segment (23) and the syringe cone segment (24) are connected to each other by way of an outer and/or an inner cuff (21).

5. The sampling cylinder in accordance with one or more of the preceding claims **characterised in that** the cylinder segment (37) and the syringe cone segment (36) are connected to each other in an axially overlapping manner.

6. The sampling cylinder in accordance with one or more of the preceding claims **characterised in that** the cylinder segment (3) and the syringe cone segment (2) can be separated in a non-destructive manner.

7. The sampling cylinder in accordance with one or more of the preceding claims **characterised in that** the cylinder segment (45) and the syringe cone segment (47) are produced in one piece and can be separated at a nominal breaking point (48).

8. The sampling cylinder in accordance with one or more of the preceding claims **characterised in that** the connection of the syringe cone segment (36) to the cylinder segment (37) is in the form of a guaranteed closure.

9. The sampling cylinder in accordance with one or more of the preceding claims **characterised by** the destruction of connection and/or sealing elements (41) or the syringe cone segment on detaching the syringe cone segment (36) from the cylinder segment (37).

10. The sampling cylinder in accordance with one or more of the preceding claims **characterised in that** in the region of the separation point of the syringe cone segment (52) and the cylinder segment (51) the sampling cylinder (50) has an axial stop (53) for the filter device (54).

## Revendications

1. Cylindre d'essai comportant un segment conique d'injection séparable d'un segment cylindrique et un dispositif de filtration, **caractérisé en ce que** le segment cylindrique (2) et une section (10) du segment conique d'injection (3) forment une paroi interne d'enveloppe commune (7) du cylindre d'essai (1) et que le segment cylindrique (2) présente un dispositif de filtration (6) comportant un filtre (8) maintenu hermétiquement par son extension axiale contre la paroi interne d'enveloppe (7) du cylindre d'essai (1) et que le filtre (8), après séparation du segment conique d'injection (3), déborde par une surface (9) axialement de sa monture (5) et du segment cylindrique (2) en position d'utilisation du dispositif de filtration (6).

2. Cylindre d'essai selon une ou plusieurs des revendications précédentes, **caractérisé en ce que** les segments cylindrique (2) et conique d'injection (3) sont réalisés en deux pièces.

3. Cylindre d'essai selon une ou plusieurs des revendications précédentes, **caractérisé en ce que** les segments cylindrique (2) et conique d'injection (3) sont reliés ensemble par la monture (5) du filtre (8).

4. Cylindre d'essai selon une ou plusieurs des revendications précédentes, **caractérisé en ce que** les segments cylindrique (23) et conique d'injection (24) sont reliés ensemble par une manchette extérieure et/ou intérieure (21).

5. Cylindre d'essai selon une ou plusieurs des revendications précédentes, **caractérisé en ce que** les segments cylindrique (37) et conique d'injection (36) sont reliés ensemble en se chevauchant axialement.

6. Cylindre d'essai selon une ou plusieurs des revendications précédentes, **caractérisé en ce que** les segments cylindrique (2) et conique d'injection (3) sont séparables sans destruction.

7. Cylindre d'essai selon une ou plusieurs des revendications précédentes, **caractérisé en ce que** les segments cylindrique (45) et conique d'injection (47) sont réalisés en un bloc et sont séparables à un point de rupture théorique (48).

8. Cylindre d'essai selon une ou plusieurs des revendications précédentes, **caractérisé en ce que** le raccordement du segment conique d'injection (36) au segment cylindrique (37) est réalisé à la manière d'un obturateur de garantie.

9. Cylindre d'essai selon une ou plusieurs des revendications précédentes, **caractérisé par** la destruction d'éléments de raccordement et/ou d'étanchéité (41) ou du segment conique d'injection lors de la séparation du segment conique d'injection (36) et du segment cylindrique (37).

10. Cylindre d'essai selon une ou plusieurs des revendications précédentes, **caractérisé en ce que** le segment d'essai (50) présente, au niveau du point de séparation du segment conique d'injection (52) et du segment cylindrique (51), une butée axiale (53) pour le dispositif de filtration (54).
